# EUROPEAN PATENT SPECIFICATION

(11) **EP 4 153 804 B1**
(45) Date of publication and mention of the grant of the patent: **19.07.2023**
(21) Application number: 21745519.5
(22) Date of filing: 24.06.2021
(51) Int. Cl.: D04H 1/4382, D04H 1/4291, D04H 1/435, D04H 1/56, D04H 3/011, D04H 3/016, D04H 3/16, B01D 39/16, A62B 23/02

(54) **IMPROVED MELT BLOWN ARTICLES AND METHODS TO FORM THEM**
VERBESSERTE SCHMELZGEBLASENE ARTIKEL UND VERFAHREN ZU IHRER HERSTELLUNG
ARTICLES OBTENUS PAR FUSION-SOUFFLAGE AMÉLIORÉS ET LEUR PROCÉDÉS DE FORMATION

(30) Priority: 26.06.2020 US 202063044637 P; 20.11.2020 US 202063116512 P
(43) Date of publication of application: 29.03.2023
(73) Proprietor: Jabil Inc., St. Petersburg, Florida 33716 (US)
(72) Inventor: RODGERS, Luke, St. Petersburg, Florida 33716 (US); FRY, Thomas, St. Petersburg, Florida 33716 (US)
(74) Representative: Gulde & Partner
(86) International application number: PCT/US2021/038892
(87) International publication number: WO 2021/262977

(56) References cited:
- WO-A1-2004/059058
- WO-A1-2006/065648
- WO-A1-2015/080913
- US-A1- 2006 079 145
- US-A1- 2017 088 709
- US-B1- 6 927 184

## Description

### Field of the Disclosure

The present disclosure relates to forming melt blown articles. In particular, the invention relates to nonwoven fabrics comprised of melt blown polymer blends of a crystalline/semicrystalline polymer and amorphous polymer that are miscible such as polylactic acid/poly (methyl methacrylate) polymer blends.

### BACKGROUND

Melt blowing of polymers involves the melting of polymer which is then passed through an orifice and blown with annularly hot air forming micro or nano diameter fibers. The liquified fibers travel though an air gap and impinge upon an uptake spool forming a non-woven fiber fabric. Conventional fabrics have been made from many polymers such as polypropylene, polyethylene, polyester, polyamide, polyvinyl chloride, and poly(methyl methacrylate). The fabrics typically made by a melt blown process typically form a nonwoven fabric having substantially nonuniform length and diameter fibers, fibers that are frayed and globules of pooled polymer causing a less non-uniform behavior and a less than desired pressure drop across the fabric when used, for example, as a filter.

US 6,927,184 B1 discloses meltblowns for use as electret filter media, comprising a cyclic olefin copolymer.

US 2006/0079145 A1 describes electret filter media in the form of polypropylene meltblowns.

Accordingly, it would be desirable to provide melt blown method that overcomes one or more problems of forming nonwoven melt blown fabrics such as described above and, in particular, to provide nonwoven fabrics having desired pressure drop and filtration uniformity.

### SUMMARY OF THE INVENTION

The invention is defined by the appended claims.

It has been discovered that particular blends of crystalline/semicrystalline polymers (referred to herein as "semi-crystalline polymer" with it being understood such polymer may be essentially crystalline) and amorphous polymers that are miscible may form uniform fiber diameters with long lengths. It is believed, without being limiting in any way, that the mixing of a sufficient amount of amorphous polymer having a Tg (glass transition temperature) sufficiently below the melt temperature of the semicrystalline polymer enables the blended polymer to realize a consistent rheology when melt blowing to give the desired fibers bonded together to form nonwoven fabrics without the aforementioned defects.

A first aspect of the invention is a method of producing a non-woven material comprising: a) feeding a blended polymer comprising, an amorphous thermoplastic polymer and a thermoplastic semi-crystalline polymer, each of the polymers being essentially miscible in the other and being blended at a weight ratio of amorphous polymer/semi-crystalline polymer of greater than 0.05 to about 20; b) heating the blended polymer to a melt pump temperature that melts the blended polymer to form a liquified feed; c) extruding the liquified feed through an orifice at an orifice temperature above the melt pump temperature and blowing said liquid feed with annular gas stream having an air set temperature above the orifice temperature to form a spray; d) cooling said spray in an air gap, and e) depositing said spray on a substrate to form the non-woven material.

A second aspect of the invention relates to a nonwoven fabric comprised of fibers of a blended polymer comprising, an amorphous thermoplastic polymer and a thermoplastic semi-crystalline polymer, each of the polymers being essentially miscible in the other and being blended at a weight ratio of amorphous polymer/semi-crystalline polymer of greater than 0.05 to 20, wherein the fibers have a length where at least 90% by number of the fibers are longer than 500 micrometers and each fiber has an average diameter that has a standard deviation from the mean of at most 20%.

### BRIEF DESCRIPTION OF THE DRAWINGS

The disclosed non-limiting embodiments are discussed in relation to the drawings appended hereto and forming part hereof, wherein like numerals indicate like elements, and in which:
FIG. 1 shows an exemplary melt blown extrusion system.
FIG. 2 is scanning electron micrograph of a commercial melt blown polypropylene filter mask.
FIG. 3 shows a scanning electron microscope image of a PMMA/PLA fabric (poly(methyl methacrylate/polylactic acid) of this invention.
FIG. 4 shows a scanning electron microscope image of a PMMA/PLA fabric of this invention.
FIG. 5 shows a scanning electron microscope image of a PMMA/PLA fabric of this invention.
FIG. 6 shows a scanning electron microscope image of a PMMA/PLA fabric of this invention.
FIG. 7 shows a scanning electron microscope image of a PMMA/PLA fabric of this invention.
FIG. 8 shows a scanning electron microscope image of a PMMA/PLA fabric of this invention.
FIG. 9 shows a scanning electron microscope image of a PMMA/PLA fabric of this invention.
FIG. 10 shows an optical micrograph of a semi-crystalline polypropylene and amorphous polypropylene fabric of this invention.

### DETAILED DESCRIPTION

Non-woven materials useful as filters or masks may be produced from numerous materials, which may include one or more of the following: polymers, polymer blends, shape memory materials, shape memory polymers, and shape memory polymer blends.

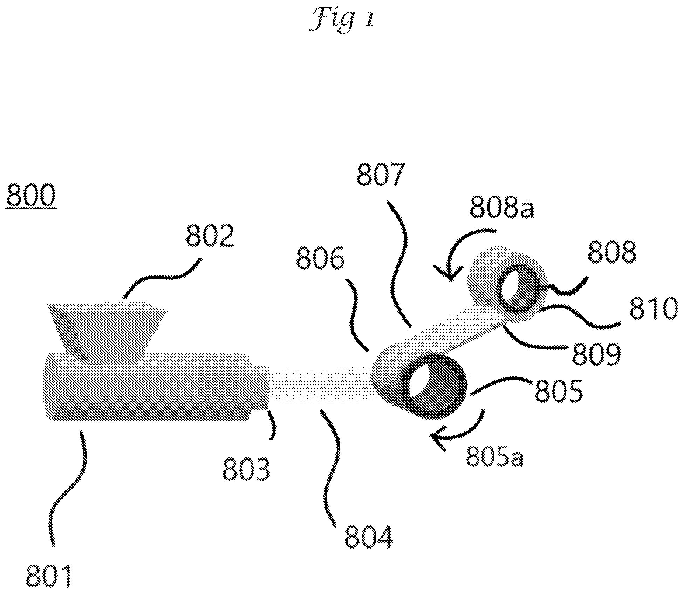

The method of this invention is a method of melt blowing. To illustrate melt blowing, Figure 1 shows an exemplary melt blown extrusion system **800.** An extruder **801** receives a polymer feed from hopper **802,** liquefies the feed, and blows/sprays the liquefied feed material through nozzle openings **803.** High velocity air (not shown) may be used to assist in blowing/spraying the liquefied feed material through nozzle openings **803.** The blown material **804** travels through air and is deposited on a rotating cylindrical surface **805,** which is shown to be rotating in the direction shown by the arrow **805a.** When the blown material **804** is deposited onto the rotating cylindrical surface **805** at location **806,** it cools and becomes solid. A solid sheet/film **807** is pulled by a second rotating cylinder **808** that is rotating in the direction shown by the arrow **808a.** Newly added sheet/film material is added at **809** onto a spool of melt blown polymer **810.**

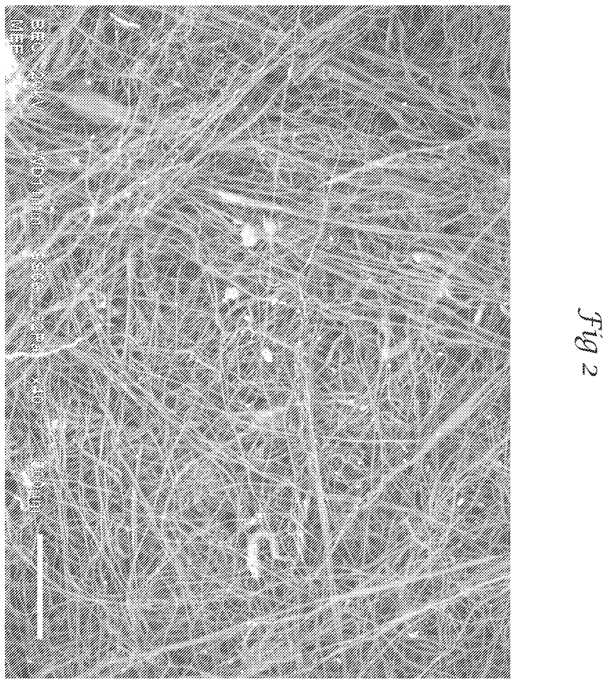

Figure 2 shows a micrograph of a commercial filter mask made of melt blown polypropylene. From the Figure, it is readily apparent this fabric has defects such as frayed fibers, melt coalesced fibers, globules of pooled polymer and the like.

The method to form the nonwoven material involves feeding a blended polymer comprising, an amorphous thermoplastic polymer and a thermoplastic semi-crystalline polymer, each of the polymers being essentially miscible in the other and being blended at a weight ratio of amorphous polymer/semi-crystalline polymer of greater than 0.05 to about 20. Essentially miscible means that there is not distinctly different glass transition temperatures as determined by DSC and as further described by US 2022/0388238.

The amorphous polymer and semi-crystalline polymer are mixed in a weight ratio such that the blend realizes the desired nonwoven material. The weight ratio of the amorphous polymer/semi-crystalline polymer mixed and blended is greater than 1 to 20. Desirably, the ratio is about 2 or 3 to about 15 or 10. Without being limiting in any way, it is postulated that the combination of the miscible polymers at the ratios and difference between melt temperature of the semi-crystalline polymer and amorphous polymers allows for the formation of more uniform in diameter long melt blown fibers without other defects such as fraying of the fibers themselves and globules of polymer.

The semi-crystalline polymer may be any thermoplastic organic polymer displaying at least about 5% crystallinity to essentially fully crystalline when heating and cooled at rates commonly experienced when forming or compounding such polymers (e.g., heating and cooling rates from ambient temperature ~25 °C to the melting temperature). That is, the polymer displays crystallinity without forced crystallization methods such as those known in the art (e.g., solvent induced crystallization and the like). Generally, the amount of crystallinity is at least about 5%, 10%, 15% or 20% to about 95%, 75%, 50% or 30%. The crystallinity may be determined by any suitable methods such as those known in the art. Illustratively, the percent crystallinity may be determined by x-ray diffraction including, for example, wide angle x-ray diffraction (WAXD), such as by using a Rigaku SmartLab x-ray diffractometer, or by differential scanning calorimetry (DSC), such as by using a TA Instruments DSC250 differential scanning calorimeter employing ASTM D3418 - 15, wherein when determining crystallinity by differential scanning calorimetry (DSC) a heating or cooling rate of 20 °C/min is used unless otherwise specified. Exemplary crystalline polymers may, depending on the chain structure, include certain polyesters, polycarbonates, polyamides, polyolefins (e.g., polyethylene, polypropylene and copolymers thereof) and the like.

The amorphous polymer may be any thermoplastic organic polymer displaying essentially no (trace if any detectable) crystallinity when heating and cooling at rates and measured as described in the previous paragraph. Exemplary amorphous polymers may, depending on the chain structure, include certain polyester, polycarbonates, polyamides, polyolefins and the like.

The melt temperature (Tm) of the semicrystalline polymer is above the transition temperature (Tg) of the amorphous polymer. The Tg of the amorphous polymer is 20 °C to 150 or 250°C below Tm. The Tg of the amorphous polymer is desirably from about 60 °C, 80 °C or 100 °C to about 140 °C or 120 °C and the semi-crystalline polymer has a Tm of at least about 160 °C to about 300 °C, 250°C, 225 °C, 200 °C or 180 °C. The Tm is determined from the melt peak of the DSC plot as described by ASTM D3418 using the midpoint of the melt peak. The Tg of the amorphous polymer is determined from the DSC plot by ASTM D3418 using the midpoint of the glass transition temperature.

The melt blending of the amorphous and semi-crystalline polymer may be performed by any suitable method and apparatus such as those known in the art. Examples include high intensity mixers and screw extruders (e.g., single and twin screw extruders). The amount of shear may be any useful to facilitate the blending and compounding to form the polymer blend. The extruder may be held at one temperature or have a gradient along the length of the extruder to facilitate compounding of the two polymers. The temperature may be any that is sufficient to form polymer blend, for example, just below the temperature where a particular condensation polymer starts to degrade. Typically, the temperature may be a temperature that is 100 °C, 50 °C, or 25 °C within the melting temperature of the semi-crystalline polymer. Typical temperatures may be from about 150 °C, 175 °C, or 200°C to about 300 °C or 250°C. The shear may be any as typically used in the practice of compounding polymers in compounding extruders. The time likewise may be any time sufficient to realize blended polymer wherein the polymers are uniformly dissolved in each other (miscible as described above). Typical times may be from 1 to 2 minutes to an hour or so. The blended polymer may be extruded and shaped into any useful shape to form the semi-crystalline blended polymer such as pellets of any shape.

An illustration may be comprised of about 15% to about 85% PMMA with the balance being PLA. Desirably the composition is comprised of at most about 50% of PMMA. The PLA may be any form of PLA such as those formed using L-lactide, D-lactide, or combination thereof. Desirably, the amount of L-lactide is at least 50%, 60%, 70%, 80% or 90% to 98% or 100% (100% may include trace amounts of D-lactide) by weight of the monomer used to make the PLA. Other polyesters such as those known in the art that readily form crystalline or semi-crystalline polymers may also be used.

The PLA or semicrystalline polymer may have any Mw to realize a blend with the PMMA or amorphous polymer that has the desired melt flow rate. Typically, the semicrystalline polymer may have a weight average molecular weight (Mw) of about 10 kDa to 500 kDa. The melt flow rate (MFR) of the semi-crystalline polymer may be any useful to form the nonwoven fabrics. Illustratively, the MFR of the polymer blend may be from 25, 50, 60 or 70 to 90, 100, 125 or 150 grams (210°C/10 min, 2. 16kg). Examples of suitable PLAs when combined with PMA are available under the tradename INGEO Biopolymer 625F and 3260HP from NatureWorks LLC and LUMINY L105 from Total Corbion PLA.

The PMMA may be any suitable PMMA such as those known in the art and may have a Mw that varies over a wide range such as from 10kDa to 3MDa so long as the PMMA exhibits rheological behavior allowing for the rapid shear and quenching while still realizing the desired degree of crystallinity and charge capability of the PLA/PMMA blend. The PMMA may be made with a small percentage (e.g., less than about 5%, 2%, or 1%) of comonomers such as those commonly used in the art (e.g., methyl acrylate, butyl acrylate and the like) to improve one or more properties such as impact strength or heat stability.

The melt flow rate of the amorphous polymer may be any useful MFR to form the nonwoven fabrics or materials. Illustratively, the MFR of the amorphous polymer is one, when combined with the semi-crystalline polymer, that realizes the desired fiber diameters and lengths as described herein. Generally, the MFR of the amorphous polymer may be from 1, 2, 5, or 10 to 100, 50, 40 or 30 grams (230°C/10 min, 3.8kg). As an illustration, PMMA that may be useful include those available under the tradename designation CA41 from PLASKOLITE and those available under the tradename PLEXIGLAS VM, VS and VSUVT from Arkema.

It has been discovered, surprisingly, that the polymer blend when melt blown as described herein form highly uniform long fibers randomly bonded to form the nonwoven (material or fabric interchangeably). Without being limiting in any way, it is postulated that the semicrystalline polymer crystallizes when blended with amorphous (PMMA) even when sheared at high rates and rapidly cooled through the melt crystallization temperature experienced in melt blowing. The degree of crystallinity by volume is from the amount of the semicrystalline polymer that crystallizes during the method described herein. Typically, the amount of semicrystalline polymer that crystallizes is from about 1%, 2%, 5% or 10% to about 50%, 40% or 30%. Thus, the degree of crystallinity of the blend of a 70% semicrystalline polymer/30% amorphous polymer blend would give about 35% degree of crystallinity for the blend.

In the method of forming a fibrous article of the polymeric composition (e.g., melt blowing process) it is desirable for the polymer blend to have a viscosity at the orifice temperature that allows for the production of fibers having a diameter of 1 to 15 micrometers with an average diameter of about 2 or 3 to 8, 7 or 6 micrometers. Typically, the MFR of the polymer blend is 20 or 30 to 1500, 1000, 500, 200, 90 or 80 grams (210°C/10 min, 2.16kg). The diameter may be determined by measuring the diameter of a number of fibers (~100) on one or more micrographs of the nonwoven fabric utilizing known image analysis techniques or by hand.

As a further illustration, the amorphous polymer may be an amorphous olefinic polymer such as cyclic olefin copolymers available under the tradename TOPAS COC from TOPAS Advanced Polymers GmbH, Germany (e.g., TOPAS 5013 COC). The semicrystalline polymer may be any miscible crystalline olefinic polymer such as commonly available polyethylene, polypropylene or copolymers thereof such as those available from The Dow Chemical Company, Exxon, Total and the like. For example, the semi-crystalline polyolefin may be Total 3860 polypropylene.

The polymer blend is heated to a melt pump temperature sufficient to melt the polymer blend and realize a liquified feed with the desired rheological behavior through the die orifice of the melt blowing apparatus. The orifice and die may be any of those customarily used in melt blown systems. For example, the orifice may have diameter of about 50 or 100 micrometers to 400 or 300 micrometers. The liquified feed is pumped through the orifice where it is impinged upon after exiting the orifice and blown by an annular gas stream into an air gap using any suitable gas (e.g., air). A secondary air stream may be directed onto the spray (fibrous spray) in an air gap between the orifice and substrate where the spray deposits and forms the nonwoven fabric.

The shear rate through the die orifice should be sufficient to realize the desired nonwoven fabric of this invention. Typically, the shear rate is at least 750 1/s to 5000, 4000 or 3500 1/s. Likewise, cooling rate through crystallization melt temperature of the semicrystalline polymer (typically, as an illustration from about 140°C to 180°C for PLA) is sufficiently rapid such that the desired microstructure is formed allowing the uniform fibers of the nonwoven fabric to be formed. Typically, the cooling rate is 10, 50, 100, 1000°C/min to 5000 °C/sec, 4000 °C/sec or 3500°C/sec, which is typically from about the melt temperature of the polymer blend to about 100°C.

Illustratively, when forming a melt blown nonwoven fabric by the invention's method, the melt pump temperature is above the melt temperature of the semicrystalline polymer to form the liquified feed and typically is from about 175 to 250°C. The polymer blend may be formed in an extruder and pumped to the melt blowing die. The die temperature is generally slightly higher than the melt pump temperature (i.e., 10% or 20% higher). For example, if the melt pump temperature is 200°C then the die temperature may be from about 220 to 250°C.

To ensure a desired cooling rate to realize the desired microstructure of the nonwoven fabric the air set temperature from the exiting of the die to impingment on the collection roller is typically set to at least about 1.3, 1.5, 1.8 or even 1.9 times greater than the melt pump temperature or die temperature, with it being understood that the air cools somewhat upon being blown from the blowing orifice until impingement upon the fiber exiting the die. The air set temperature of the annular gas stream and secondary air stream may be the same or different.

Surprisingly, the non-woven fabric may have an efficiency of 98-99% with only a 2 mm Hg (millimeters of mercury) pressure drop made as described herein. Filtering efficiency and pressure drop may be measured using a TSI 8130A instrument with an air flow rate of 32 L/min with a salt (NaCl) diameter of 0.1 µm or 0.2 µm. Illustratively the fabric may be comprised of 30% w/w PMMA and 70% w/w PLA. The nonwoven material may be electrically charged to form, for example, a filter or filter mask. The surface charge of the polymeric composition may be at least 50, 100, 200, 500 or even 1000 electron volts. The surface charge may be measured by commercially available devices such as described in US5401446, col 8, lines 6 to 21. The fabric may be surface charged by any known method of charging fabrics such as filters such as described in U.S. Pat. and Pat. Publ.: US2740184; US4215682; US4375718; US4588537; US4592815; US4904174; 5122048; US5401446; and US2006/0079145. The charging voltage may be any voltage useful to impart the charge to the filter. Illustratively, the charging voltage may be from about 2kV to 50kV.

The nonwoven fabric may be thermoformable. Illustratively, the PMMA/PLA fabric described above may be placed over a fixture and heated to an elevated temperature in order to mold the PMMA/PLA fabric into a desired shape. Generally, when thermoforming the nonwoven fabric it may heated to temperature that is approximately equal to, equal to, or above a transition temperature avoiding deforming the fibers of the fabric. The transition temperature (to heat to) may be the transition temperature of a polymer that is present in the polymer blend. The transition temperature (to heat to) may be the transition temperature of the polymer with the lowest transition temperature (compared to the other polymer or polymers in the polymer blend).

The nonwoven fabric of the present invention is comprised of fibers of the blended polymer and the fibers have a length where at least 90% by number of the fibers are longer than 500 micrometers and a diameter where the mean diameter of each fiber along the length of said fiber are within 20% of the mean of the diameter of that fiber. The nonwoven fabric desirably has at least about 90%, 95%, 99% or more by number of the fibers being longer than 500 micrometers, 1 millimeter or 2 millimeters. The nonwoven fabric surprisingly may have a low fabric weight and even when a higher fabric weight is used they may have a low pressure drop when used as a filter. The fabric weight may be for example 25, 50, or 100 to 300 or 200 grams/m². The filter typically has pressure drop of at most about 5 mm Hg (666 Pa) 4mm Hg (533 Pa), 2 mm Hg (266 Pa) or 1 mm Hg (133 Pa) even, for example, when the fabric weight is greater than 50 to 300 grams/m² or multiple layers are used (layer being a separate discreet fabric sheet for example). One or more layers may be used to make the filter. The filter typically also may have an efficiency of at least 95% or 98%. The filter because of the microstructure as described herein may retain the surface charge potential even when heated. For example, the surface potential, typically decays at most about 10% after exposure to 70°C for one hour with essentially no loss in efficiency or less than 5%, 3%, 2%, or 1% loss in efficiency after such heating.

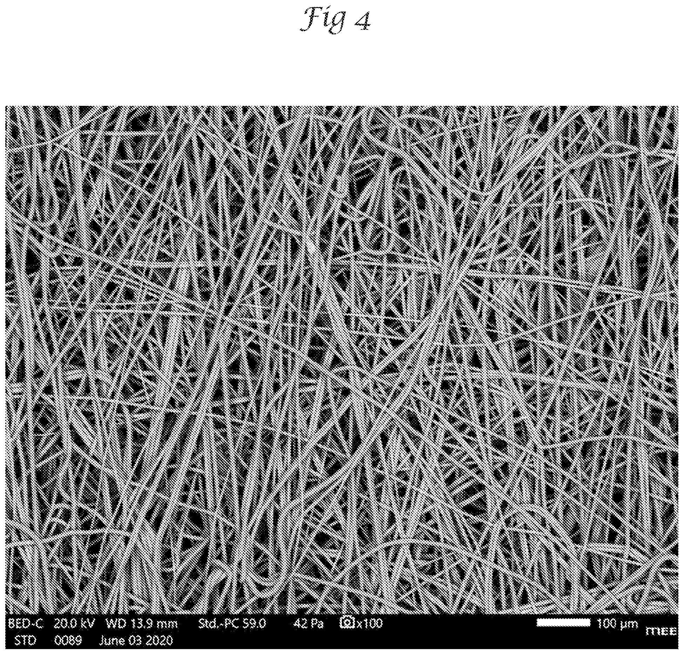

It has been discovered that ultra-high efficiency fabric, may also be comprised of fiber diameters all less than 1 micrometer to about 0.05 micrometer, with the lengths as described above. For both this embodiment and the embodiment described in the prior paragraph, the diameter along the length of the fibers display surprisingly good uniformity (with essentially no defects such as fraying or pooled globules of polymer, with it being understood that there may be trace amounts of such defects and, illustratively, there may be one or two defects in 10 random selections of 100 X scanning electron micrographs of the fabric). Figure 4 exemplifies a fabric displaying no such defects, whereas Figure 2 readily shows an abundance of such defects. Typically each fiber has an average diameter that has standard deviation from the mean of at most about 20%, 10% or even 5%, which may be determined by measuring about 50 fibers at 5 to 10 equidistant points from one end to the other end along the fiber length in a 250X micrograph and may utilize known image analysis techniques or measured by hand.

Surprisingly, the non-woven fabric comprised of the blended polymer may have an efficiency of 98-99% with only a 2 mm Hg (millimeters of mercury) pressure drop, having the fiber structure described here, which may be made by the melt blown process described herein. Filtering efficiency and pressure drop were measured using a TSI 8130A instrument. An air flow rate of 32 L/min was used for measurements with a salt (NaCl) diameter of 0.1 µm or 0.2 µm.

Advantageously, melt blown fabrics of the present invention may be thermoformed. Illustratively a fabric made from PMMA and PLA may have an amount of PMMA in a PMMA/PLA blend from 15 to 85% w/w to produce a PMMA/PLA blend that exhibits shape memory properties. Likewise, the amount of PLA in a PMMA/PLA blend may be from 15 to 85% w/w to produce a PMMA/PLA blend that exhibits shape memory. PMMA/PLA blends having between 15-85% w/w PMMA and having between 15-85% PLA may be used to produce a PMMA/PLA blend that exhibits shape memory properties. The shape memory effect and the moldability of the nonwoven fabric such as the PMMA/PLA blend may be increased by adding an elastomeric additive, such as an impact modifier. The elastomeric additive, such as an impact modifier, may be added at a concentration of 0 to 25% w/w of the total weight of the mixture. A temperature range of 80 to 85 °C may be used in the heating step to form the polymer blend around a fixture to give it a permanent shape. Alternatively, the polymer blend may be heated and formed to a user's face.

Many materials that are used for producing surgical masks experience deformation of the polymer fibers when heated near their thermoformable temperature. Therefore, many thermoformed masks today have a layer of material that is thermoformable to provide the thermoformability of the product. This inherently results in a multi-layer structure, as opposed to the single layer structure as described herein.

The nonwoven fabric of this invention may form a better seal with the user's face, compared to today's surgical masks. A better fit could be offered to consumers (mask wearers) by offering different sizes and shapes of masks. For example, a face mask that can be thermoformed without altering or deforming the polymer fibers could be molded into small, medium, large, etc. sizes and could be offered in different shapes, such as circular, oval, square, rectangular, etc. to better fit users faces. Custom surgical masks could also be produced by making a mold of an individual's face, fitting the moldable thermoform mask over the mold, and heating the mask material on the mold to give the mask a permanent shape.

It has been discovered that the nonwoven fabrics of this invention are particularly useful to form thermoformed fabric shapes such as thermoformed masks without deforming the fibers. Typically, a temperature of about 50 to about 100 degrees Celsius may be used to thermoform a shaped fabric such as a filter comprising PMMA and PLA. A heated (and softened) mask can be pressed to a user's face and as cools it forms to the contours of the user's face. The thermoformed mask results in a face mask having a tight seal to the user's face. At least in part, because the fibers do not deform when thermoforming, the shape may be altered and refitted or shaped for another use or the like (reverse thermoformability). Other polymers or polymer blends that exhibit shape-memory and that are capable of filtering may also be used in the disclosed embodiments.

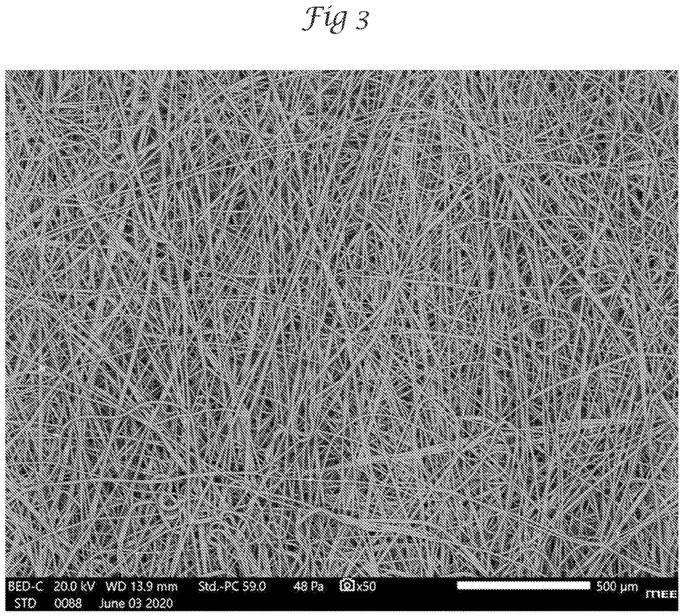

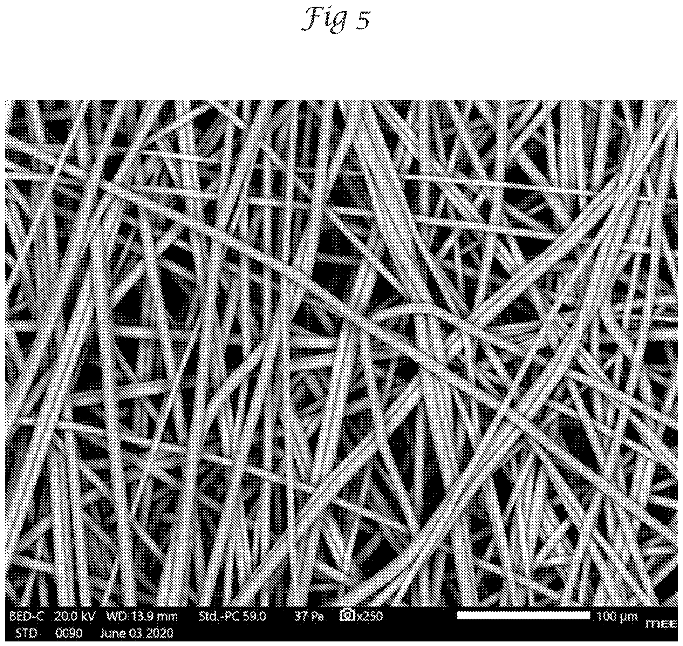

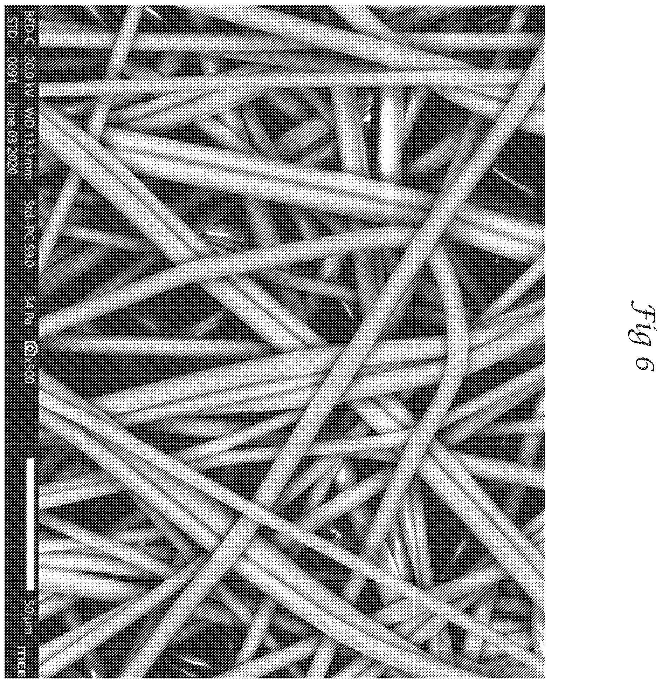

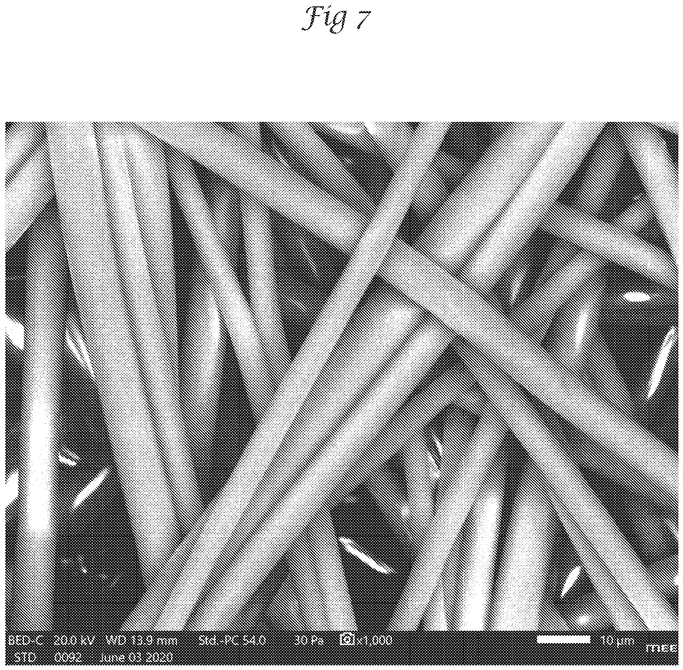

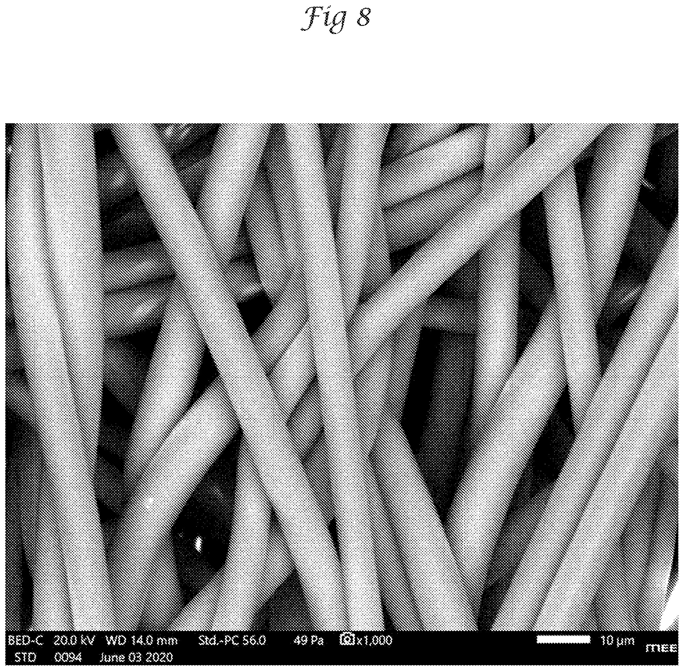

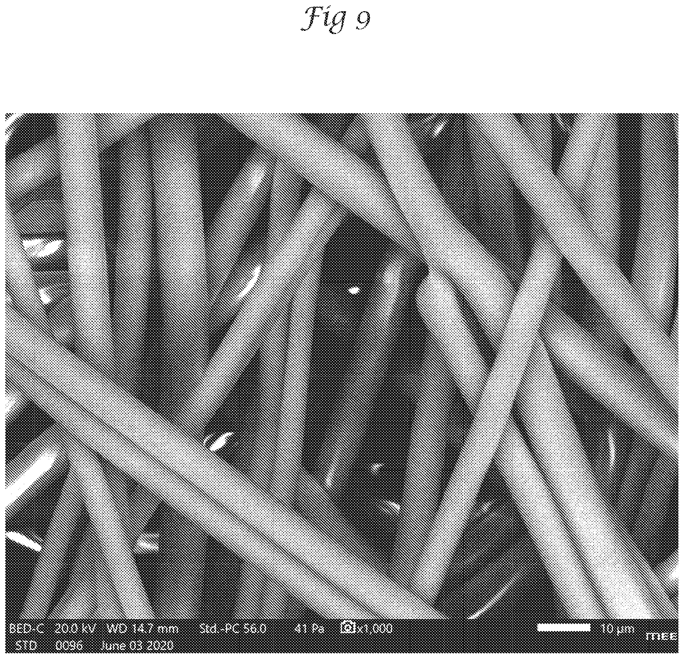

Figures 3 through 9 show scanning electron microscope (SEM) micrographs of a melt blown PMMA/PLA fabric useful for a filter. As shown in Figures 3 through 9, the fibers in the PMMA/PLA blend maintain their individual shape and are not deformed. This contrasts with, for example, some polypropylene fabrics that are used in mask applications. In these fabrics, one can visually observe fibers (using SEM) that are deformed. The deformation in these polypropylene mask fabrics may appear as parallel fibers melting into one another to form a larger fiber. It may also appear as an individual fiber branching off along the fiber's backbone (i.e., fray along the fiber length). The deformation or defects may also appear as globules of pooled polymer. The aforementioned defects are illustrated and displayed in the commercial polypropylene melt blown filter of Figure 2.

### Examples

Nonwoven fabric filters are made by melt blowing through a die having a 200 micrometer diameter orifice. The composition is 70% by weight PLA (INGEO Biopolymer 625F) and 30% by weight PMMA (PLASKOLITE CA41), unless otherwise noted in Table 1. The melt extruder temperature (melt pump temperature) is from about 230 to 250 °C, the die temperature is set at 200°C and the blowing air set temperature is 380°C and air pressure is 40 pounds per square inch. The collector distance is as noted in Table 1. The filters were tested with salt particles in a similar manner as described in US20060079145 (para. 28) except that the salt size was 0.1 and 0.2 micrometer as shown in Table 1 and as described herein. The Comparative Examples are made in the same way except that a charge enhancing additive was added or the fabric was made with polypropylene as also noted in Table 1.

From Table 1, it is readily apparent that the filters of the invention when charged have a greater efficiency for a given pressure drop compared to polypropylene typically used for such filters. (see Examples 6 and 7 versus Comparative Examples 5 and 6). Likewise, it is quite evident that the filters of the present invention have a much lower pressure drop for heavier weight fabrics allowing for more robust breathable filters. Surprisingly, the filters and polymeric composition of the present invention do not require a charge enhancing additive like typical polypropylene filters (see Comparative Examples 1-3). This may be due to the additive deleteriously affecting the desired microstructure.

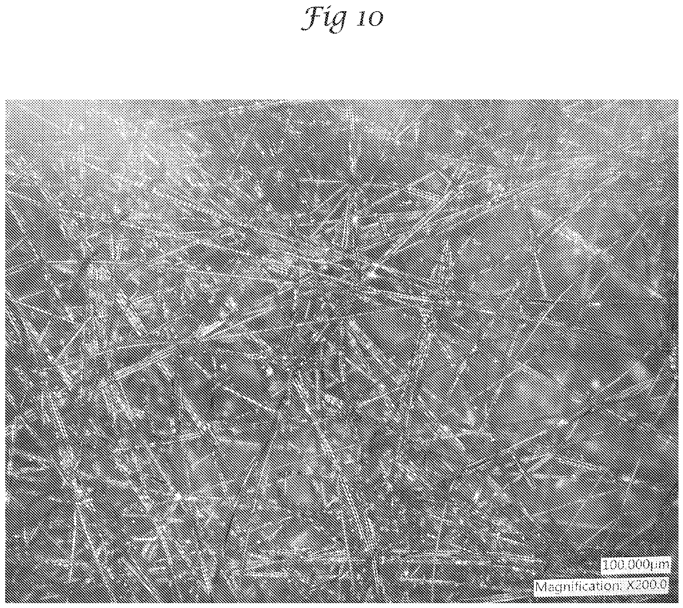

Example 8 is made in the same manner as described for Example 1 except the polymer blend that is melt blown is comprised of 30% by weight of amorphous polymer that is a cyclic olefin copolymer TOPAS 5013 and 70% by weight semicrystalline polypropylene Total 3860X. The polymers were melt blended together at 250 °C in 27 mm diameter barrel (40/1 length to diameter) Leistritz twin screw extruder. Also, the melt blowing pump temperature is between about 200 and 270 °C, the die temperature is between 240 and 300 °C and the air set temperature is between about 350 and 400 °C. The distance from the orifice to the collection spool (air gap) is 5 inches The fabric formed is shown in Figure 10, which shows the fibers are uniform essentially transparent without defects as described herein.

**Table 1:**

| | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|
| Material | * | * | * | * | * | * | * | # | # | # | PP | PP | PP |
| Filter # of layers | 1 | 1 | 2 | 3 | 1 | 2 | 3 | 1 | 2 | 3 | 1 | 2 | 3 |
| Layer Fabric weight (g/m2) | 95 | 95 | 95 | 95 | 95 | 95 | 95 | 95 | 95 | 95 | 30 | 30 | 30 |
| Applied Charge (kV) | 0 | 40 | 40 | 40 | 40 | 40 | 40 | 40 | 40 | 40 | 40 | 40 | 40 |
| Die Collector distance (inches) | 5 | 5 | 5 | 5 | 6 | 6 | 6 | 5 | 5 | 5 | 5 | 5 | 5 |
| Efficiency (0.1 micron) | 41.2% | 83% | 92.6% | 97.7% | 81.7% | 94.9% | 98.3% | 55.9% | 73.7% | 84.0% | 84.7% | 94.9% | 98.9% |
| Efficiency (0.2 micron) | 28.5 | 85.9% | 95.4% | 99.3% | 85.9% | 97.5% | 99.5% | 53.4% | 73.7% | 86.5% | 88.0% | 97.6% | 99.7% |
| Delta P @ 10cm/s (Pa) | 54.8 | 53.3 | 77.7 | 118.3 | 39.6 | 90.9 | 135.7 | 24.2 | 50.1 | 73.78 | 68.2 | 133.2 | 206.9 |

| | | | | | | | | | | | | | |
|---|---|---|---|---|---|---|---|---|---|---|---|---|---|
| ^{∗}70% PLA/3 0% PMMA # 70% PLA/30% PMMA + 1% Magnesium Stearate PP - Polypropylene (Exxon Achieve PP6936G2) | | | | | | | | | | | | | |

## Claims

1. A method of producing a non-woven material comprising:
a) feeding a blended polymer comprising, an amorphous thermoplastic polymer and a thermoplastic semi-crystalline polymer, each of the polymers being essentially miscible in the other and being blended at a weight ratio of amorphous polymer/semi-crystalline polymer of greater than that 0.05 to 20, wherein the amorphous polymer has a glass transition temperature that is 20 °C to 250 °C below the melt temperature of the thermoplastic semi-crystalline polymer;
b) heating the blended polymer to a melt pump temperature that melts the blended polymer to form a liquified feed;
c) extruding the liquified feed through an orifice at an orifice temperature above the melt pump temperature and blowing said liquid feed with annular gas stream having an air set temperature to form a spray;
d) cooling said spray in an air gap, and
e) depositing said spray on a substrate to form the non-woven material.

2. The method of producing the non-woven material of claim 1, wherein the amorphous polymer has a glass transition temperature that is 20 °C to 150 °C below the melt temperature of the thermoplastic semi-crystalline polymer.

3. The method of any one of the preceding claims, further comprising passing the nonwoven material through an electric field.

4. The method of any one of the preceding claims, wherein the blended polymer is comprised of poly(methylmethacrylate) and polylactic acid, the poly(methylmethacrylate) being present in the blended polymer from 5% to 85% by weight of the composition and the balance being polylactic acid.

5. The method of claim 4, wherein the polylactic acid is comprised of the polymerization of L-lactide, D-lactide or combination thereof, and the L-lactide is present in an amount of at least 50% by weight to 100% by weight of the polylactic acid.

6. The method of any one of the preceding claims, wherein the nonwoven material is a fabric that has fibers having a diameter of 1 micrometer to 15 micrometers.

7. The method of any one of the preceding claims, wherein the semicrystalline polymer has a melt flow rate of 10 to 100 grams (210°C/10 minutes, 2.6 kg); and/or the amorphous polymer has a melt flow rate of 1 to 100 grams (230°C/10 minutes, 3.8 kg).

8. The method of any one of the preceding claims, wherein the amorphous thermoplastic polymer has a glass transition temperature of 60 °C to 120 °C and the semi-crystalline thermoplastic polymer has a melting temperature as determined by DSC of at least 140 °C.

9. The method of claim 1, wherein the semicrystalline polymer is polylactic acid and the amorphous polymer is poly(methylmethacrylate).

10. The method of claim 1, wherein the semicrystalline polymer is polyethylene, polypropylene or copolymer thereof and the amorphous polymer is a cyclic olefin copolymer.

11. A nonwoven fabric comprised of fibers of a blended polymer comprised of an amorphous thermoplastic polymer and a thermoplastic semi-crystalline polymer, each of the polymers being essentially miscible in the other and being blended at a weight ratio of amorphous polymer/semi-crystalline polymer of greater than 0.05 to 20 and the fibers have a length where at least 90% by number of the fibers are longer than 500 micrometers and each fiber has an average diameter that has a standard deviation from the mean of at most 20%, which are determined by measuring 50 fibers at 5 to 10 equidistant points from one end to the other end along the fiber length in a 250X micrograph.

12. The nonwoven fabric of claim 11, wherein the diameter of the fibers range from 0.5 micrometer to 15 micrometers and have an average diameter of 2 to 8 micrometers.

13. The nonwoven fabric of claim 11, wherein the diameter of the fibers range from 1 micrometer to 0.05 micrometer.

14. The nonwoven fabric of claim 11, wherein the semicrystalline polymer is polylactic acid and the amorphous polymer is poly(methylmethacrylate); or
the semicrystalline polymer is polyethylene, polypropylene or copolymer thereof and the amorphous polymer is a cyclic olefin copolymer.

15. The nonwoven fabric of anyone of claims 11 to 14, wherein the nonwoven fabric has a fabric weight of 50 to 300 grams/m².

## Patentansprüche

1. Verfahren zur Herstellung eines Vliesstoffs, umfassend:
a) Zuführen eines gemischten Polymers, das aus einem amorphen thermoplastischen Polymer und einem thermoplastischen teilkristallinen Polymer besteht, wobei jedes der Polymere im Wesentlichen mit dem anderen mischbar ist und in einem Gewichtsverhältnis von amorphem Polymer/teilkristallinem Polymer von mehr als 0,05 bis 20 gemischt wird, wobei das amorphe Polymer eine Glasübergangstemperatur aufweist, die 20 °C bis 250 °C unter der Schmelztemperatur des thermoplastischen teilkristallinen Polymers liegt;
b) Erhitzen des gemischten Polymers auf eine Schmelzpumpentemperatur, wobei das gemischte Polymer schmilzt und eine verflüssigte Einspeisung bildet;
c) Extrudieren der verflüssigten Einspeisung durch eine Öffnung mit einer Öffnungstemperatur oberhalb der Schmelzpumpentemperatur und Blasen der besagten flüssigen Einspeisung mit einem ringförmigen Gasstrom, der eine eingestellte Lufttemperatur aufweist, um einen Sprühnebel zu bilden;
d) Kühlen des besagten Sprays in einem Luftspalt, und
e) Auftragen des besagten Sprays auf ein Substrat zum Ausbilden des Vliesstoffs.

2. Verfahren zur Herstellung des Vliesstoffs nach Anspruch 1, wobei das amorphe Polymer eine Glasübergangstemperatur aufweist, die 20 °C bis 150 °C unterhalb der Schmelztemperatur des thermoplastischen teilkristallinen Polymers liegt.

3. Verfahren nach einem der vorhergehenden Ansprüche, ferner umfassend das Leiten des Vliesstoffs durch ein elektrisches Feld.

4. Verfahren nach einem der vorhergehenden Ansprüche, wobei das gemischte Polymer aus Poly(methylmethacrylat) und Polymilchsäure besteht, wobei das Poly(methylmethacrylat) in dem gemischten Polymer zu 5 bis 85 Gew.-% der Zusammensetzung vorhanden ist und der Rest Polymilchsäure ist.

5. Verfahren nach Anspruch 4, wobei die Polymilchsäure aus der Polymerisation von L-Lactid, D-Lactid oder einer Kombination davon besteht und das L-Lactid in einer Menge von mindestens 50 Gew.-% bis 100 Gew.-% der Polymilchsäure vorhanden ist.

6. Verfahren nach einem der vorhergehenden Ansprüche, wobei der Vliesstoff ein Stoff ist, der Fasern mit einem Durchmesser von 1 Mikrometer bis 15 Mikrometer aufweist.

7. Verfahren nach einem der vorhergehenden Ansprüche, wobei das teilkristalline Polymer eine Schmelzflussrate von 10 bis 100 Gramm (210°C/10 Minuten, 2,6 kg) aufweist; und/oder
das amorphe Polymer eine Schmelzflussrate von 1 bis 100 Gramm (230°C/10 Minuten, 3,8 kg) aufweist.

8. Verfahren nach einem der vorhergehenden Ansprüche, wobei das amorphe thermoplastische Polymer eine Glasübergangstemperatur von 60 °C bis 120 °C aufweist und das teilkristalline thermoplastische Polymer eine mittels DSC bestimmte Schmelztemperatur von mindestens 140 °C aufweist.

9. Verfahren nach Anspruch 1, wobei es sich bei dem teilkristallinen Polymer um Polymilchsäure und bei dem amorphen Polymer um Poly(methylmethacrylat) handelt.

10. Verfahren nach Anspruch 1, wobei das teilkristalline Polymer Polyethylen, Polypropylen oder ein Copolymer davon ist und das amorphe Polymer ein zyklisches Olefin-Copolymer ist.

11. Vliesstoff, der aus Fasern eines gemischten Polymers besteht, das aus einem amorphen thermoplastischen Polymer und einem thermoplastischem teilkristallinem Polymer besteht, wobei jedes der Polymere im Wesentlichen mit dem anderen mischbar ist und in einem Gewichtsverhältnis von amorphem Polymer/teilkristallinem Polymer von mehr als 0.05 bis 20 gemischt ist und die Fasern eine Länge haben, bei der mindestens 90 % der Fasern, bezogen auf die Anzahl der Fasern, länger als 500 Mikrometer sind und jede Faser einen durchschnittlichen Durchmesser hat, der eine Standardabweichung vom Mittelwert von höchstens 20 % aufweist, die durch Messen von 50 Fasern an 5 bis 10 gleich weit entfernten Punkten von einem Ende zum anderen Ende entlang der Faserlänge in einer 250X-Mikroaufnahme bestimmt werden.

12. Vliesstoff nach Anspruch 11, wobei der Durchmesser der Fasern im Bereich von 0,5 Mikrometer bis 15 Mikrometer liegt und einen durchschnittlichen Durchmesser von 2 bis 8 Mikrometer aufweist.

13. Vliesstoff nach Anspruch 11, wobei der Durchmesser der Fasern im Bereich von 1 Mikrometer bis 0,05 Mikrometer liegt.

14. Vliesstoff nach Anspruch 11, wobei das teilkristalline Polymer Polymilchsäure und das amorphe Polymer Poly(methylmethacrylat) ist; oder
das teilkristalline Polymer Polyethylen, Polypropylen oder ein Copolymer davon ist und das amorphe Polymer ein zyklisches Olefin-Copolymer ist.

15. Vliesstoff nach einem der Ansprüche 11 bis 14, wobei der Vliesstoff ein Stoffgewicht von 50 bis 300 g/m² aufweist.

## Revendications

1. Procédé de fabrication d'un matériau non tissé comprenant :
a) introduire un polymère mélangé constitué d'un polymère thermoplastique amorphe et un polymère thermoplastique semi-cristallin, chacun des polymères étant essentiellement miscible dans l'autre et étant mélangé à un rapport pondéral polymère amorphe/polymère semi-cristallin supérieur à 0,05 à 20, le polymère amorphe ayant une température de transition vitreuse inférieure de 20 °C à 250 °C à la température de fusion du polymère thermoplastique semi-cristallin ;
b) chauffer le polymère mélangé à une température de pompe à fusion qui fait fondre le polymère mélangé pour former une charge liquéfiée ;
c) extruder la charge liquéfiée à travers un orifice à une température d'orifice supérieure à celle de la pompe à fusion et souffler ladite charge liquéfiée avec un flux de gaz annulaire ayant une température 'air réglée pour former un spray ;
d) refroidir ledit spray dans un espace d'air, et
e) déposer ledit spray sur un substrat pour former le matériau non tissé.

2. Procédé de fabrication du matériau non-tissé de la revendication 1, dans lequel le polymère amorphe a une température de transition vitreuse inférieure de 20 °C à 150 °C à la température de fusion du polymère thermoplastique semi-cristallin.

3. Procédé de l'une quelconque des revendications précédentes, comprenant en outre le passage du matériau non tissé à travers un champ électrique.

4. Procédé de l'une quelconque des revendications précédentes, dans lequel le polymère mélangé est constitué de poly(méthylméthacrylate) et d'acide polylactique, le poly(méthylméthacrylate) étant présent dans le polymère mélangé de 5 % à 85 % en poids de la composition et le reste étant de l'acide polylactique.

5. Procédé de la revendication 4, dans lequel l'acide polylactique est constitué de la polymérisation du L-lactide, du D-lactide ou d'une combinaison de ceux-ci, et le L-lactide est présent en une quantité allant d'au moins 50 % en poids à 100 % en poids de l'acide polylactique.

6. Procédé de l'une quelconque des revendications précédentes, dans lequel le matériau non tissé est un tissu dont les fibres ont un diamètre compris entre 1 micromètre et 15 micromètres.

7. Procédé de l'une quelconque des revendications précédentes, dans lequel le polymère semi-cristallin a un débit de fusion de 10 à 100 grammes (210°C/10 minutes, 2,6 kg) ; et/ou
le polymère amorphe a un débit de fusion de 1 à 100 grammes (230°C/10 minutes, 3,8 kg).

8. Procédé de l'une quelconque des revendications précédentes, dans lequel le polymère thermoplastique amorphe a une température de transition vitreuse comprise entre 60 °C et 120 °C et le polymère thermoplastique semi-cristallin a une température de fusion déterminée par DSC d'au moins 140 °C.

9. Procédé de la revendication 1, dans lequel le polymère semi-cristallin est de l'acide polylactique et le polymère amorphe est du poly(méthylméthacrylate).

10. Procédé de la revendication 1, dans lequel le polymère semi-cristallin est du polyéthylène, du polypropylène ou un de leurs copolymères et le polymère amorphe est un copolymère d'oléfine cyclique.

11. Matériau non-tissé constitué de fibres d'un polymère mélangé composé d'un polymère thermoplastique amorphe et d'un polymère thermoplastique semi-cristallin, chacun des polymères étant essentiellement miscible dans l'autre et étant mélangé à un rapport pondéral de polymère amorphe/polymère semi-cristallin de plus de 0,05 à 20 et les fibres ont une longueur où au moins 90 % en nombre des fibres sont plus longues que 500 micromètres et chaque fibre a un diamètre moyen qui a un écart type de la moyenne d'au moins 20%, qui sont déterminés en mesurant 50 fibres en 5 à 10 points équidistants d'une extrémité à l'autre extrémité le long de la longueur de fibre dans une micrographie 250X.

12. Matériau non-tissé de la revendication 11, dans lequel le diamètre de fibres va de 0,5 micromètre à 15 micromètres et ont un diamètre moyen de 2 à 8 micromètres.

13. Matériau non-tissé de la revendication 11, dans lequel le diamètre des fibres est compris entre 1 micromètre et 0,05 micromètre.

14. Matériau non-tissé de la revendication 11, dans lequel le polymère semi-cristallin est de l'acide polylactique et le polymère amorphe est du poly(méthylméthacrylate) ; ou
le polymère semi-cristallin est du polyéthylène, du polypropylène ou un de leurs copolymères et le polymère amorphe est un copolymère d'oléfine cyclique.

15. Matériau non-tissé de l'une quelconque des revendications 11 à 14, dans lequel le matériau non-tissé a un poids de tissu de 50 à 300 grammes/m².
